# FASCICULE DE BREVET EUROPEEN

(11) **EP 2 606 775 B1**
(45) Date de publication et mention de la délivrance du brevet: **11.01.2017**
(21) Numéro de dépôt: 12198199.7
(22) Date de dépôt: 19.12.2012
(51) Int. Cl.: A47J 27/08, A47J 27/09

(54) **Soupape de purge pour appareil de cuisson sous pression**
Entlüftungsventil für Dampfdruckkochtopf
Purge valve for pressure cooker

(30) Priorité: 22.12.2011 FR 1162271
(43) Date de publication de la demande: 26.06.2013
(73) Titulaire: SEB S.A., 69130 Ecully (FR)
(72) Inventeur: Cartigny, Michel, Pierre, 21310 Mirebeau (FR); Murat, Pascal, Roland, Clément, 21121 Fontaine les Dijon (FR)
(74) Mandataire: Martin, Didier Roland Valéry

(56) Documents cités:
- EP-A1- 1 277 427
- GB-A- 802 785
- US-A- 2 501 185

## Description

La présente invention se rapporte au domaine général des soupapes de purge destinées aux appareils de cuisson sous pression, et plus particulièrement aux appareils de cuisson d'aliments de type autocuiseurs domestiques.

La présente invention concerne notamment une soupape de purge pour appareil de cuisson sous pression, ladite soupape étant destinée à évacuer hors de l'enceinte de cuisson dudit appareil, au début de la cuisson, l'air qui se trouve initialement contenu dans ladite enceinte de cuisson, ladite soupape de purge comprenant d'une part un corps de soupape formant un siège, et d'autre part un organe obturateur mobile conçu pour se déplacer, sous l'effet de la pression régnant dans l'enceinte de cuisson, d'une configuration d'ouverture, dans laquelle il est écarté dudit siège et autorise la fuite d'un flux gazeux en provenance de ladite enceinte, à une configuration de fermeture, dans laquelle il vient au contact étanche dudit siège et assure l'étanchéité de l'enceinte.

La présente invention concerne également en tant que tel un appareil de cuisson sous pression de type autocuiseur alimentaire ou autoclave.

Il est connu de doter les autocuiseurs, destinés à cuire les aliments dans une atmosphère de vapeur d'eau sous pression, d'une soupape de purge qui permet d'évacuer l'air initialement contenu dans l'enceinte de cuisson, au début de la phase de cuisson.

Un exemple d'une telle soupape est décrit dans le document GB 802 785 A2.

On peut ainsi accélérer le cycle de cuisson en chassant l'air qui serait sinon susceptible, en raison de ses propriétés d'isolant thermique, de retarder et perturber la montée en température et en pression de l'appareil.

Si les soupapes de purge connues donnent généralement satisfaction, elles peuvent toutefois souffrir de certains inconvénients.

En particulier, les soupapes de purge connues peinent parfois à réguler finement et de manière reproductible le basculement de l'enceinte de sa configuration de fuite à sa configuration étanche, ce qui peut pénaliser le fonctionnement de l'appareil si la fermeture de l'enceinte intervient trop tôt, alors que ladite enceinte contient encore de l'air, ou bien au contraire trop tard, en maintenant ainsi un débit de fuite qui empêche ou retarde la montée en température et en pression fonctionnelles de l'appareil.

A ce titre, s'il a été envisagé d'améliorer la fiabilité de telles soupapes de purge, les solutions proposées peuvent impliquer la mise en oeuvre de systèmes complexes, requérant parfois la réalisation et l'assemblage particulièrement précis de pièces finement calibrées, ce qui tend à compliquer la fabrication de la soupape et à augmenter le coût de l'appareil.

En outre, les conditions sévères auxquelles sont exposées les soupapes de purge connues peuvent être à l'origine de défaillances, par exemple par encrassement, entartrage ou corrosion de ladite soupape, ou bien encore par un endommagement résultant de la fatigue ou du vieillissement des matériaux.

En outre, il peut arriver que les soupapes de purge connues ne donnent pas entière satisfaction dans certaines conditions d'utilisation de l'autocuiseur.

Les objets assignés à la présente invention visent par conséquent à remédier aux inconvénients susmentionnés et à proposer une nouvelle soupape de purge pour appareil de cuisson sous pression qui soit de structure simplifiée, particulièrement robuste et fiable, et dont le fonctionnement soit précis et reproductible.

Un autre objet assigné à l'invention vise à proposer une nouvelle soupape de purge qui soit particulièrement adaptée à une utilisation au sein d'autocuiseurs domestiques.

Un autre objet assigné à l'invention vise à proposer une nouvelle soupape de purge particulièrement polyvalente, capable d'optimiser de nombreux types de cycles de cuisson, quelles que soient les conditions d'utilisation de l'appareil de cuisson.

Un autre objet assigné à l'invention vise à proposer une nouvelle soupape de purge dont la fabrication, l'assemblage, ou le remplacement est simple et peu onéreux.

Un autre objet assigné à l'invention vise à proposer une nouvelle soupape de purge qui renforce la sécurité de fonctionnement de l'appareil de cuisson.

Les objets assignés à l'invention visent enfin à proposer un nouvel appareil de cuisson sous pression amélioré, qui permette d'optimiser la durée des cycles de cuisson, et plus particulièrement les phases de montée en pression, et ainsi d'économiser l'énergie, tout en présentant une structure simple, robuste et fiable.

Les objets assignés à l'invention sont atteints à l'aide d'une soupape de purge pour appareil de cuisson sous pression, ladite soupape étant destinée à évacuer hors de l'enceinte de cuisson dudit appareil, au début de la cuisson, l'air qui se trouve initialement contenu dans ladite enceinte de cuisson, ladite soupape de purge comprenant d'une part un corps de soupape formant un siège et d'autre part un organe obturateur mobile conçu pour se déplacer, sous l'effet de la pression régnant dans l'enceinte de cuisson, d'une configuration d'ouverture, dans laquelle il est écarté dudit siège et autorise la fuite d'un flux gazeux en provenance de ladite enceinte, à une configuration de fermeture, dans laquelle il vient au contact étanche dudit siège et assure l'étanchéité de l'enceinte, ladite soupape étant caractérisée en ce qu'elle comporte un organe de rappel élastique, distinct du corps de soupape et/ou de l'organe obturateur, qui est agencé pour solliciter l'organe obturateur vers sa configuration d'ouverture, à l'encontre de la pression régnant dans l'enceinte de cuisson.

Les objets assignés à l'invention sont également atteints à l'aide d'un appareil de cuisson sous pression, de type autocuiseur alimentaire ou autoclave, qui comporte au moins une soupape de purge conforme à l'invention.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
- La figure 1 illustre, selon une vue partielle en perspective, un couvercle d'autocuiseur pourvu d'une première variante de réalisation de soupape de purge conforme à l'invention.
- Les figures 2 et 3 illustrent, selon des vues en perspective respectivement éclatée et assemblée/écorchée, ladite première variante de réalisation de soupape de purge conforme à l'invention.
- Les figures 4 et 5 illustrent selon des vues en coupe, ladite première variante de réalisation de soupape de purge conforme à l'invention, respectivement dans sa configuration d'ouverture et sa configuration de fermeture.
- La figure 6 illustre, selon une vue en coupe, une seconde variante de réalisation de soupape de purge conforme à l'invention.

La présente invention concerne une soupape de purge 1 pour appareil 2 de cuisson sous pression, ledit appareil étant destiné à maintenir son contenu dans un milieu essentiellement constitué de vapeur d'eau porté à une pression et une température supérieures à la pression et à la température atmosphériques ambiante.

A cet effet, l'appareil de cuisson 2 pourra comprendre une cuve (non représentée), ainsi qu'un couvercle 3 qui est conçu pour être fixé de manière amovible sur ladite cuve de sorte à définir une enceinte 4 sensiblement étanche destinée à recevoir le contenu de l'appareil.

De façon particulièrement préférentielle, l'appareil 2 constitue un appareil de cuisson d'aliments, de type autocuiseur alimentaire, dont le contenu peut être formé par tout type d'aliments.

Il est toutefois parfaitement envisageable que ledit appareil 2 puisse être destiné à d'autres usages, et par exemple à la stérilisation, notamment de récipients, bocaux ou instruments, et puisse ainsi former par exemple un autoclave.

Bien entendu, le couvercle 3 pourra avantageusement être pourvu de moyens de verrouillage 30 destinés à le maintenir fermement sur la cuve, de type étrier, mâchoires, baïonnette, ou tout autre système équivalent bien connu de l'homme du métier.

L'appareil pourra en outre comporter un ou plusieurs joints d'étanchéité périphériques 3A destinés à assurer l'ajustement étanche du couvercle 3 sur la cuve.

Par ailleurs, l'appareil de cuisson 2, et plus particulièrement le couvercle 3 pourra comprendre au moins un, et éventuellement plusieurs, organes de régulation de pression, distincts de la soupape de purge 1, permettant de réguler la pression de fonctionnement dudit appareil, et plus particulièrement de l'intérieur de l'enceinte 4, pendant la cuisson, lesdits organes étant plus particulièrement destinés à maintenir ladite pression de fonctionnement régnant dans l'enceinte, laquelle est avantageusement supérieure au seuil de déclenchement Pp de la soupape de purge 1, en deçà d'une valeur de pression maximale prédéterminée.

A cet effet, ledit appareil 2 pourra par exemple être pourvu d'une soupape tarée apte à créer une fuite entre l'enceinte et l'atmosphère extérieure en cas d'apparition d'une surpression excessive dans ladite enceinte.

Selon l'invention, la soupape de purge 1 est destinée à évacuer hors de l'enceinte de cuisson 4 de l'appareil, au début de la cuisson, l'air qui se trouve initialement contenu dans ladite enceinte de cuisson, la purge accélérant ainsi la montée en température et en pression de l'intérieur de l'enceinte.

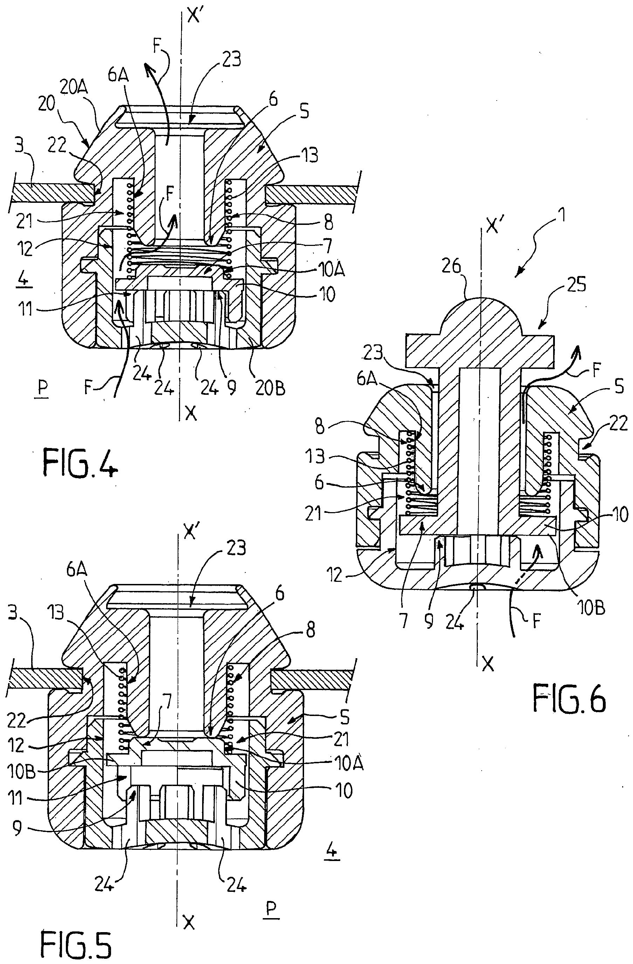

A cet effet, ladite soupape de purge 1 comprend d'une part un corps de soupape 5 formant un siège 6, et d'autre part un organe obturateur 7 mobile conçu pour se déplacer, sous l'effet de la pression P régnant dans l'enceinte de cuisson 4, d'une configuration d'ouverture, illustrée sur les figures 4 et 6, dans laquelle ledit organe obturateur 7 est écarté dudit siège 6 et autorise la fuite d'un flux gazeux F en provenance de ladite enceinte 4, à une configuration de fermeture, illustrée sur la figure 5, dans laquelle l'organe obturateur 7 vient au contact étanche dudit siège 6 et assure l'étanchéité de ladite enceinte 4.

Ainsi, en début de cuisson, la soupape de purge 1 se trouve en configuration d'ouverture et crée un passage de fuite entre l'intérieur de l'enceinte et l'extérieur de l'appareil, de manière à permettre l'évacuation progressive de l'air contenu dans ladite enceinte, au fur et à mesure que celui-ci est chassé par la montée en température et la formation de vapeur d'eau.

Lorsque la pression régnant dans l'enceinte 4 atteint et dépasse la pression seuil Pp de déclenchement de la soupape, ladite pression provoque le passage de la soupape de sa configuration d'ouverture à configuration de fermeture, ce qui restaure l'étanchéité de l'enceinte 4 et permet la poursuite de la montée en température et en pression de ladite enceinte jusqu'aux valeurs de fonctionnement.

Selon une caractéristique importante de l'invention, la soupape de purge 1 comporte un organe de rappel élastique 8 qui est distinct du corps de soupape 5 et/ou distinct de l'organe obturateur 7, et de préférence distinct de chacun de ces deux éléments, ledit organe de rappel élastique 8 étant agencé pour solliciter l'organe obturateur 7 vers sa configuration d'ouverture, à l'encontre de la pression qui règne dans l'enceinte de cuisson 4.

Avantageusement, la réalisation de la soupape de purge 1 au moyen d'éléments constitutifs distincts permet de réaliser une conception modulaire qui simplifie la fabrication des pièces séparées ainsi que les opérations d'assemblage ou, le cas échéant, de maintenance ou d'échange.

Tel que cela est illustré sur les figures, l'organe de rappel élastique 8 est de préférence interposé entre le siège 6 et l'organe obturateur 7 afin de pouvoir exercer sur ce dernier, lorsqu'il se rapproche du siège, un effort de rappel opposé à l'effort exercé par la pression sur ce même organe obturateur et qui tend ainsi à maintenir ledit organe obturateur dans sa position d'ouverture.

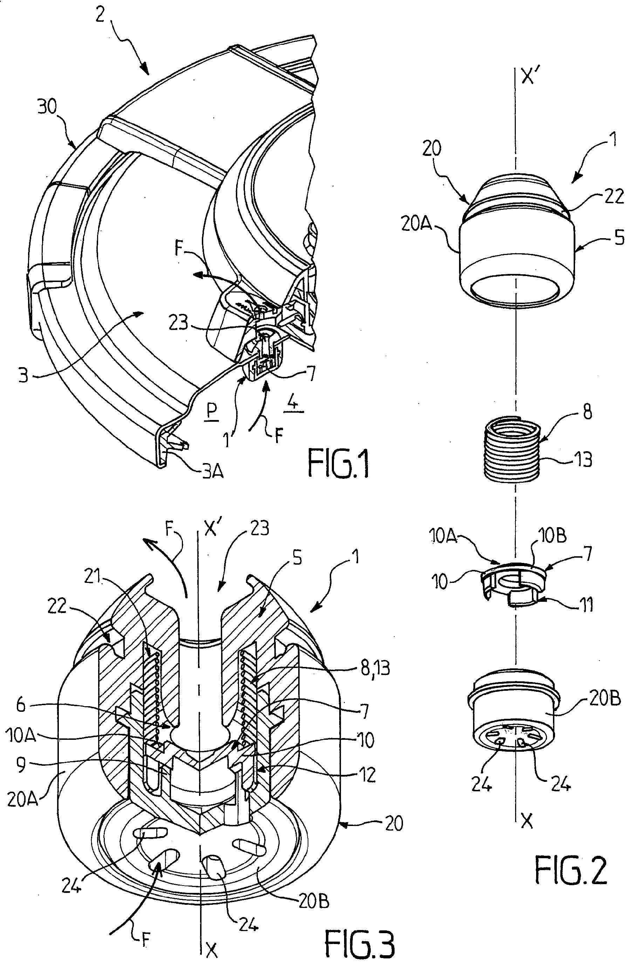

De préférence, tel que cela est illustré sur la figure 2, l'organe obturateur 7 pourra reposer, lorsqu'il se trouve dans sa configuration d'ouverture, et plus particulièrement sa configuration d'ouverture maximale, en appui contre une butée frontale 9 qui limite son déplacement en éloignement du siège 6, et plus particulièrement qui limite la distance séparant ledit siège 6 de la position d'ouverture maximale de l'organe obturateur 7.

Ainsi, la soupape peut présenter une butée frontale 9 apte à pré-contraindre l'organe obturateur 7 à l'encontre de l'organe de rappel élastique 8, en particulier lorsque la soupape se trouve en configuration d'ouverture maximale.

Un telle disposition constructive peut permettre d'exercer sur ledit organe obturateur 7, à l'encontre de l'organe de rappel élastique 8, une précontrainte de compression qui se transmet audit organe de rappel élastique 8, ce qui autorise un tarage et, le cas échéant, un ajustement plus fin de la pression seuil de déclenchement Pp de la soupape. Néanmoins la distance entre l'obturateur 7 et le siège 6 doit avoir une distance suffisante pour avoir au repos une section de passage supérieure à celle entre l'obturateur 7 et la surface interne fixe de la paroi du corps de soupape formant la chemise 12, cette section étant la section limitante. De plus, la distance ne doit pas être trop importante afin que la surpression régnant au dessus de l'obturateur 7 soit proche de 0.

De préférence, tel que cela est illustré sur les figures, l'organe obturateur peut être formé par un piston 10 qui est monté mobile à translation à l'encontre du siège 6.

De préférence, la course dudit piston 10 pourra être sensiblement rectiligne, et en l'espèce verticale lorsque le couvercle 3 se trouve en position sur la cuve, le mouvement dudit piston 10 pouvant par ailleurs être sensiblement guidé, à la manière d'un coulisseau, par exemple par l'intermédiaire de moyens de guidage 11 qui peuvent être formés par exemple, tel que cela est illustré sur les figures 2 et 5, par des pattes ou même par une couronne annulaire faisant saillie sur le piston 10 et coopérant, de préférence par glissement, avec des éléments de guidage fixes de formes sensiblement conjuguées ménagées dans la base du corps 5 de la soupape.

Avantageusement, une telle conception est particulièrement robuste et possède un comportement très fiable, même lorsque les différentes pièces, et notamment l'organe de rappel élastique 8, baignent dans le flux gazeux F, composé notamment d'air et de vapeur d'eau, qui s'échappe de l'enceinte et qui est canalisé par le corps de soupape qui forme sensiblement la chemise 12 du piston 10.

Ainsi, il est possible de simplifier la structure de la soupape de purge 1 sans sacrifier à sa fiabilité.

Par ailleurs, l'organe de rappel élastique 8 est de préférence formé par un ressort hélicoïdal 13, dont l'effort résistant est de préférence compris entre 1 et 5 grammes, préférentiellement 3 grammes, étant entendu que la valeur retenue sera choisie en fonction de la géométrie exacte proposée et est directement liée aux surfaces mises en jeu pour atteindre la valeur de déclenchement Pp. La soupape de purge selon l'invention comprend aussi un organe de rappel élastique 8 formé par un ressort hélicoïdal 13, dont la raideur est appropriée à la section du piston 10.

A titre d'exemple, ledit ressort pourra être réalisé en inox et présenter une longueur à vide sensiblement comprise entre 8 mm et 15 mm pour un diamètre intérieur de spires de l'ordre de 6,5 mm étant entendu que ces valeurs ne sont nullement limitatives, et qu'elles pourraient même être très largement dépassées.

En outre, le piston 10 et/ou le siège 6 pourront être pourvus respectivement d'un premier fût épaulé 10A et d'un second fût épaulé 6A, fûts sur lesquels le ressort hélicoïdal 13, interposé entre le piston 10 et le siège 6, pourra être enfilé respectivement par chacune de ses extrémités, et plus particulièrement, tel que cela est visible sur les figures 2 et 3, être enfilé par sa première extrémité supérieure sur le fût 6A du siège et par son extrémité inférieure opposée sur le fût 10B du piston.

Une telle structure présente avantageusement une grande simplicité, une très bonne stabilité en fonctionnement, le ressort 13 et le piston 10 étant avantageusement maintenus et guidés par rapport au siège, mais également une grande facilité d'assemblage, ledit ressort 13 pouvant être facilement enfilé sur les portées des fûts 10A, 6A de sorte à être pris en sandwich entre les épaulements respectifs desdits fûts qui forment axialement des butées en opposition.

De préférence, le siège 6, l'organe obturateur 7, et plus globalement le piston 10 voire le corps de soupape 5 et la soupape 1 dans son ensemble pourront présenter sensiblement des formes de révolution autour de l'axe (XX') le long duquel s'opère le déplacement de l'organe obturateur 7.

Par ailleurs, la soupape de purge 1 pourra avantageusement former un module pré-assemblé qui pourra comprendre d'une part une première demi-coque 20A et d'autre part une seconde demi-coque 20B, ladite seconde demi-coque 20B étant rapportée sur ladite première demi-coque 20A pour former une coque 20 qui constitue avantageusement le corps 10 de la soupape et délimite une chambre 21 qui renferme l'organe obturateur 7 et l'organe de rappel élastique 8.

Avantageusement, la soupape de purge 1 pourra ainsi se présenter sous forme d'un sous-ensemble stable, autonome et interchangeable, qui pourra être aisément rapporté sur le couvercle 3, par exemple par emboîtement ou encliquetage traversant la paroi dudit couvercle 3, la coque 20 pouvant à cet effet être pourvue d'une gorge circulaire de retenue 22.

De préférence, les deux demi-coques 20A, 20B seront chacune monobloc et conçues pour s'emboîter axialement, selon l'axe de déplacement de l'organe obturateur (XX'), et formeront ainsi d'une part une tête supérieure 20A et d'autre part une culasse inférieure 20B, qui pourront avantageusement être solidarisées l'une à l'autre par vissage, par collage et/ou par encliquetage annulaire tel que cela est représenté sur les figures 3 à 6.

Une telle solution permet en effet de simplifier l'assemblage de la soupape de purge 1 ainsi que sa fabrication, puisque celle-ci fait intervenir des pièces de révolution facilement réalisables par moulage et qui ne nécessitent pas de tolérance de fabrication trop sévères.

De préférence, la demi-coque 20A, correspondant à la partie de tête supérieure sur les figures, formera le siège 6 et comportera un ou plusieurs orifices de fuite 23 correspondants, destiné à faire communiquer la chambre 21 avec l'extérieur de l'appareil lorsque l'organe obturateur 7 est décollé du siège 6.

De préférence, elle comportera un unique orifice de fuite 23 formant un canal sensiblement circulaire centré sur le siège 6, et plus globalement sur l'axe (XX') de la soupape, qui pourra avantageusement être creusé dans le fût épaulé 6A.

Ladite première demi-coque 20A pourra également présenter une portion supérieure sensiblement tronconique pour faciliter son insertion et son encliquetage à travers le couvercle 3, et être de surcroît réalisée à cet effet dans un matériau élastique de type élastomère, préférentiellement de type silicone.

La seconde demi-coque 20B pourra quant à elle présenter un, ou de préférence plusieurs, orifices d'admission 24, tels que des ouïes, formés par exemple par des trous circulaires ou oblongs tel que cela est notamment illustré sur la figure 3, orientés sensiblement radialement et de manière sensiblement équirépartie autour de l'axe (XX'), lesdits orifices d'admission 24 faisant avantageusement communiquer, de préférence de manière permanente, l'intérieur de l'enceinte de cuisson 4 avec la chambre 21 de la soupape de purge.

De façon particulièrement préférentielle, le fût épaulé 6A du siège pourra être formé d'un seul tenant avec la première demi-coque 20A, et plus particulièrement faire saillie vers l'intérieur de la soupape depuis la paroi supérieure de ladite première demi-coque.

De manière analogue, une structure sensiblement cylindrique formant d'une part la butée frontale 9 et d'autre part une partie des moyens de guidage 11 du piston 10 pourra être formée d'un seul tenant avec la seconde demi-coque 20B, et plus particulièrement faire saillie vers l'intérieur de la chambre 21 à partir de la paroi inférieure de ladite seconde demi-coque 20B dans laquelle sont percés les orifices d'admission 24.

Avantageusement, la soupape 1 peut ainsi se présenter sous la forme d'un sous-ensemble particulièrement simple, comportant seulement quatre pièces à savoir deux demi-coques rapportées l'une sur l'autre et solidarisées l'une à l'autre qui renferment, positionnent, et guident les organes mobiles de la soupape, à savoir le ressort 13 et le piston 10.

Avantageusement, le piston 10 se trouvant logé, de même que le ressort 13, dans la chambre 21, il n'est ainsi pas directement exposé au contenu de l'enceinte mais juste au flux F qui s'en échappe et qui traverse les orifices d'admission 24, ce qui contribue à limiter les risques d'encrassement de la soupape par des débris d'aliments, le flux gazeux étant d'abord filtré par lesdits orifices d'amission.

Par ailleurs, selon une variante de réalisation, l'organe obturateur 7 pourra présenter, tel que cela est illustré sur la figure 6, un prolongement 25 formant une tige de verrouillage destinée à empêcher la manoeuvre du mécanisme d'ouverture de l'appareil de cuisson 2 lorsque ledit organe obturateur 7 se trouve en configuration de fermeture.

En d'autres termes, lorsque la pression P régnant dans l'enceinte de cuisson 4 dépasse le seuil de déclenchement P_{S} de la soupape de purge 1, et en particulier lorsque l'appareil se trouve, pendant la cuisson, à sa pression de fonctionnement, l'obturateur 7, qui se trouve plaqué en appui contre le siège 6, c'est-à-dire en position remontée sur les figures, fait suffisamment saillir le prolongement 25 pour que celui-ci vienne coopérer, à la manière d'une clenche, avec une partie du mécanisme d'ouverture, et par exemple avec une découpe ou un épaulement idoine ménagé dans un disque ou un bras solidaire du bouton central de manoeuvre qui commande l'ouverture et la fermeture des mâchoires 30.

Ainsi, la soupape de purge 1 peut offrir une sécurité supplémentaire empêchant l'ouverture accidentelle de l'appareil tant que celui-ci est sous pression.

A l'inverse, il est envisageable que le mécanisme d'ouverture de l'appareil de cuisson puisse coopérer avec l'organe obturateur 7, et plus particulièrement agir sur la tige 25, et plus particulièrement sur un dôme terminal 26 de cette dernière, pour forcer le passage et/ou le maintien dudit organe obturateur 7 à distance de son siège 6, lorsque ledit mécanisme d'ouverture est dans une configuration telle que le couvercle 3 n'est pas verrouillé sur la cuve, et ce de manière à maintenir ouvert un orifice de fuite, et par conséquent à empêcher la montée en pression de l'appareil, tant que le couvercle n'est pas convenablement ajusté et verrouillé sur la cuve.

De préférence, la pression seuil de déclenchement P_{S} de la soupape de purge 1, à partir de laquelle la pression régnant dans l'enceinte 4 surmonte la force de rappel de l'organe élastique 8 et place l'organe obturateur 7 dans sa configuration de fermeture contre le siège 6, correspond à une surpression, par rapport à la pression ambiante de l'atmosphère environnant l'appareil, sensiblement comprise entre 5 et 15 kPa, et de préférence voisine de 10 kPa.

Avantageusement, ce seuil de pression de déclenchement pourra être ajusté finement, notamment en pré-contraignant plus ou moins l'organe de rappel élastique 8 lorsque l'organe obturateur 7 se trouve dans sa position d'ouverture totale, par un réglage approprié de la butée frontale 9, et plus particulièrement en venant pré-comprimer le ressort 13 sur une longueur choisie, par l'intermédiaire du piston 10, au moyen de ladite butée frontale 9 qui vient appuyer sur la face opposée dudit piston.

Avantageusement, on peut ainsi définir très précisément le seuil de déclenchement de la soupape, et de surcroît limiter la course du piston 10, c'est-à-dire la distance que doit parcourir l'organe obturateur 7 pour passer de sa configuration d'ouverture totale au repos à sa configuration de fermeture au contact du siège 6.

On obtient ainsi une soupape plus précise, plus rapide, et plus efficace que si l'organe obturateur 7 pendait simplement sous le siège 6 sous l'effet de son propre poids, ou même si le piston 10 pendait en étant librement suspendu au ressort 13.

Par ailleurs, la soupape est de préférence agencée pour limiter la section de passage permettant la circulation du flux gazeux, en particulier lorsqu'elle se trouve en configuration d'ouverture maximale, à une valeur inférieure ou égale à 12 mm², de préférence sensiblement comprise entre 4 et 12 mm², et préférentiellement voisine de 7,5 mm².

En d'autres termes, la soupape de purge 1 présente, le long du chemin qu'elle définit pour permettre au flux gazeux F de la traverser, au moins un goulet dont la superficie de passage, considérée transversalement au sens d'écoulement dudit flux gazeux, de préférence définie indépendamment de la configuration occupée par la soupape, et de préférence sensiblement permanente et invariante, est inférieure ou égale à 12 mm², et par exemple voisine de 7,5 mm². Plus particulièrement, cette section de passage pourra correspondre à la surface de la section annulaire sensiblement normale à l'axe (XX') de la soupape correspondant au jeu existant radialement entre le piston 10 mobile d'une part et la surface interne fixe de la paroi du corps de soupape formant chemise 12 d'autre part, tel que cela est illustré sur les figures 4 à 6.

Bien entendu, les surfaces cumulées des orifices d'admission 24 d'une part, et du ou des orifices de fuite 23 d'autre part, ainsi que les autres sections de passage de la chambre 21 seront avantageusement supérieures ou égales à cette valeur critique.

En effet, les inventeurs on constaté qu'il convenait de respecter une certaine plage d'ouverture du passage globalement procuré par la soupape de purge 1 dans sa position d'ouverture. Une section trop petite accélérerait la montée en pression car l'apport d'énergie fera monter en pression trop rapidement l'autocuiseur de telle sorte que la purge sera incomplète. Inversement si la section est trop grande l'air sera totalement évacué, mais l'appareil n'arrivera pas à monter en pression et la purge ne se fermera pas.

La plage proposée présente ainsi un compromis acceptable dans la plupart des cycles de cuisson usuels, on peut par exemple utiliser un diamètre de piston de 8,4 mm (9,62mm² de secteur de fuite), ou de préférence un diamètre de piston de 8,6 mm (6,95 mm² de secteur de fuite) ; cette dernière valeur (environ 7 mm²) donnant de bons résultats, tel que le montrent les résultats qui suivent dans lesquels le % indique la proportion d'air évacué en fin de purge) :

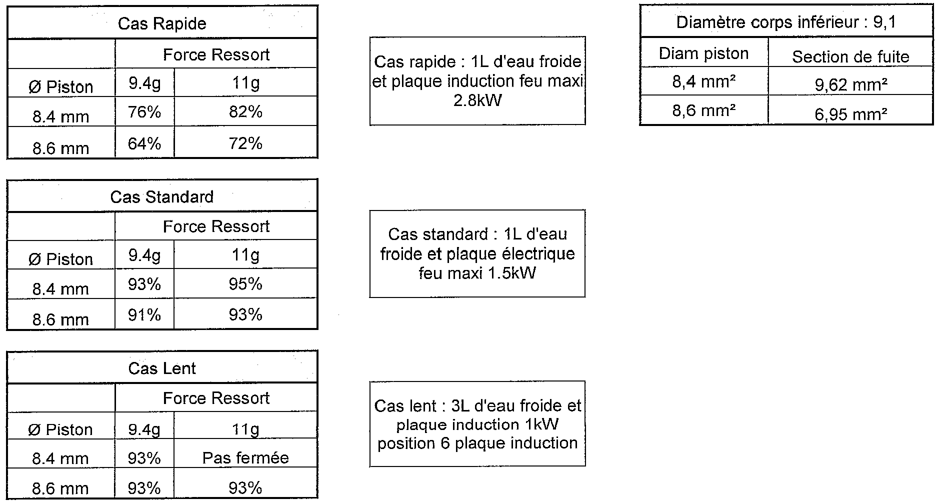

Bien entendu, l'invention concerne également en tant que tel un appareil de cuisson 2 sous pression, de type autocuiseur alimentaire ou autoclave, comportant au moins une soupape de purge 1 tel que décrit plus haut.

De façon particulièrement préférentielle, ledit appareil constituera un autocuiseur, destiné à la cuisson d'aliments sous pression, et comprenant un couvercle 3 rapporté sur une cuve (non représentée) pour délimiter une enceinte de cuisson 4 étanche, ledit couvercle comprenant d'une part la soupape de purge 1, qui permet de faire communiquer l'enceinte 4 avec l'extérieur en début de cuisson, et d'autre part au moins un organe de régulation de pression, distinct de ladite soupape de purge.

Avantageusement, la régulation de la pression de fonctionnement de l'appareil pendant la cuisson, ainsi que, le cas échéant, les fonctions de sécurité permettant l'évacuation d'une éventuelle surpression de fonctionnement, seront de préférence dévolues à des organes distincts de la soupape de purge 1.

Le fonctionnement d'un tel appareil va maintenant être décrit brièvement en référence aux figures.

Après avoir disposé le contenu, et plus particulièrement les aliments ainsi que la quantité d'eau appropriée au cycle choisi, dans la cuve, l'utilisateur place et verrouille le couvercle 3 sur cette dernière.

L'enceinte 4 se trouve alors sensiblement à pression et température atmosphériques P₀, T₀.

La soupape de purge 1 se trouve alors en configuration d'ouverture, tel que cela est illustré sur les figures 3, 4 et 6, l'organe obturateur 7 se trouvant à distance du siège 6, et, plus particulièrement, le piston 10 étant plaqué par le ressort 13 contre l'appui 9 que lui procure la demi-coque 20A.

L'utilisateur place ensuite l'appareil 2 sur une source de chauffe, de telle sorte que la température qui règne à l'intérieur de l'enceinte 4 s'élève progressivement.

Ce faisant, l'air initialement contenu dans la cuve s'échappe à travers le couvercle via ladite soupape 1.

Plus particulièrement, le flux gazeux F pénètre à l'intérieur de la chambre 21 par les orifices d'admission 24, circule dans ladite chambre en contournant les bords latéraux, et plus particulièrement la collerette 10B du piston 10, avant de converger axialement pour s'engager dans l'orifice de fuite 23 d'où il poursuit son chemin jusqu'à déboucher à l'extérieur de l'appareil.

Sous l'effet de l'élévation de température et de la création progressive de vapeur d'eau, la pression régnant dans l'enceinte 4 augmente progressivement en exerçant ainsi un effort de plus en plus important sur la face libre du piston 10, à l'opposé et à l'encontre du ressort 13, étant entendu que l'on doit générer plus rapidement de la vapeur que de l'échappement de vapeur par le piston de façon à obtenir une bonne montée en pression.

Lorsque la force de poussée résultant de ladite pression surpasse le seuil de résistance dudit ressort 13, c'est-à-dire lorsque la pression régnant dans l'enceinte 4 atteint et dépasse la pression seuil de déclenchement P_{S}, ledit piston 10 est décollé de son appui 9 et remonte, ici verticalement sur les figures, vers le siège 6, en comprimant progressivement le ressort 13, et ce jusqu'à venir en appui, à la manière d'une couronne d'étanchéité, contre le rebord dudit siège 6.

Une fois l'organe obturateur 7 ainsi plaqué sur le siège 6, c'est-à-dire la soupape placée dans sa configuration de fermeture, l'étanchéité de l'enceinte 4 est restaurée, et la fuite du flux gazeux F interrompue.

Avantageusement, cette remontée du piston 10 s'accompagne, le cas échéant, de la remontée concomitante de la tige de sécurité 25 qui vient verrouiller le mécanisme de manoeuvre du couvercle afin d'empêcher l'ouverture inopinée de ce dernier.

La chauffe peut alors se poursuivre, la température et la pression régnant dans l'enceinte augmentant progressivement jusqu'à atteindre les valeurs de fonctionnement de l'appareil, lesquelles sont avantageusement régulées par un dispositif idoine, tel qu'une soupape de régulation.

Une fois la cuisson terminée, la source de chauffe est éteinte, et l'enceinte refroidie et/ou purgée du mélange gazeux qu'elle contient.

Lorsque la pression régnant dans l'enceinte redescend sous un seuil de réinitialisation, et plus particulièrement sous la pression seuil de déclenchement P_{S} de la soupape de purge, la force exercée par le ressort 13 comprimé surpasse l'effort exercé par la pression interne de l'appareil sur la face opposée dudit piston, de telle sorte que ledit ressort 13 décolle ledit piston 10 du siège 6, et repousse ainsi l'organe obturateur 7, ici selon un mouvement descendant, jusqu'à amener ce dernier en appui contre la butée frontale 9.

La soupape de purge 1 retourne ainsi en configuration d'ouverture, l'appareil étant alors disponible pour une nouvelle utilisation.

Avantageusement, la soupape 1 conforme à l'invention permet ainsi de réaliser une fonction de purge automatique au moyen d'une structure particulièrement simple, compacte, peu onéreuse à fabriquer et facile à assembler ou à échanger, et qui présente un fonctionnement fiable, reproductible, ainsi qu'une excellente longévité.

## Revendications

1. Soupape (1) de purge pour appareil (2) de cuisson sous pression, ladite soupape étant destinée à évacuer hors de l'enceinte de cuisson (4) dudit appareil, au début de la cuisson, l'air qui se trouve initialement contenu dans ladite enceinte de cuisson, ladite soupape de purge comprenant d'une part un corps de soupape (5) formant un siège (6) et d'autre part un organe obturateur (7) mobile conçu pour se déplacer, sous l'effet de la pression (P) régnant dans l'enceinte de cuisson (4), d'une configuration d'ouverture, dans laquelle il est écarté dudit siège et autorise la fuite d'un flux gazeux (F) en provenance de ladite enceinte (4), à une configuration de fermeture, dans laquelle il vient au contact étanche dudit siège (6) et assure l'étanchéité de l'enceinte (4), ladite soupape étant **caractérisée en ce qu'**elle comporte un organe de rappel élastique (8), distinct du corps de soupape (5) et/ou de l'organe obturateur (7), qui est agencé pour solliciter l'organe obturateur (7) vers sa configuration d'ouverture, à l'encontre de la pression régnant dans l'enceinte de cuisson (4).

2. Soupape de purge selon la revendication 1 **caractérisée en ce qu'**elle présente une butée frontale (9) apte à pré-contraindre l'organe obturateur (7) à l'encontre de l'organe de rappel élastique (8).

3. Soupape de purge selon la revendication 1 ou 2 **caractérisée en ce qu'**elle est agencée pour limiter la section de passage permettant la circulation du flux gazeux, en particulier lorsqu'elle se trouve en configuration d'ouverture maximale, à une valeur inférieure ou égale à 12 mm², de préférence sensiblement comprise entre 4 et 12 mm², et préférentiellement voisine de 7,5 mm².

4. Soupape de purge selon l'une des revendications précédentes **caractérisée en ce que** l'organe obturateur (7) est formé par un piston (10) monté mobile à translation à l'encontre du siège (6).

5. Soupape de purge selon l'une des revendications précédentes **caractérisée en ce que** l'organe de rappel élastique (8) est formé par un ressort hélicoïdal (13), dont la raideur est appropriée à la section du piston (10).

6. Soupape de purge selon les revendications 4 et 5 **caractérisée en ce que** le piston (10) et/ou le siège (6) sont pourvus respectivement d'un premier fût épaulé (10A) et d'un second fût épaulé (6A), sur lesquels le ressort hélicoïdal (13), interposé entre le piston (10) et le siège (6), est enfilé respectivement par chacune de ses extrémités.

7. Soupape de purge selon l'une des revendications précédentes **caractérisée en ce qu'**elle forme un module pré-assemblé comprenant d'une part une première demi-coque (20A) qui forme le siège (6) et qui comporte un ou plusieurs orifices de fuite (23) correspondant, et d'autre part une seconde demi-coque (20B) comprenant un ou plusieurs orifices d'admission (24), ladite seconde demi-coque étant rapportée sur ladite première demi-coque pour former une coque (20) constituant le corps (5) de la soupape et délimitant une chambre (21) qui renferme l'organe obturateur (7) et l'organe de rappel élastique (8).

8. Soupape de purge selon l'une des revendications précédentes **caractérisée en ce que** la pression seuil de déclenchement de la soupape (P_{S}), à partir de laquelle la pression régnant dans l'enceinte (4) surmonte la force de rappel de l'organe élastique (8) et place l'organe obturateur (7) dans sa configuration de fermeture contre le siège (6), correspond à une surpression sensiblement comprise entre 5 et 15 kPa, et de préférence voisine de 10 kPa

9. Soupape de purge selon l'une des revendications précédentes **caractérisée en ce que** l'organe obturateur (7) présente un prolongement (25) formant une tige de verrouillage destinée à empêcher la manoeuvre du mécanisme d'ouverture de l'appareil de cuisson lorsque ledit organe obturateur se trouve en configuration de fermeture.

10. Appareil (2) de cuisson sous pression, de type autocuiseur alimentaire ou autoclave, comportant au moins une soupape de purge (1) selon l'une des revendications précédentes.

11. Appareil (2) selon la revendication 10 **caractérisé en ce qu'**il constitue un autocuiseur, destiné à la cuisson d'aliments sous pression, comprenant un couvercle (3) rapporté sur une cuve pour délimiter une enceinte de cuisson (4) étanche, ledit couvercle (3) comprenant d'une part la soupape de purge (1), permettant de faire communiquer l'enceinte avec l'extérieur en début de cuisson, et d'autre part au moins un organe de régulation de pression, distinct de ladite soupape de purge et permettant de réguler la pression de fonctionnement de l'appareil pendant la cuisson.

## Patentansprüche

1. Entlüftungsventil (1) für einen Druckkochtopf (2), wobei das Ventil dazu bestimmt ist, aus dem Kochraum (4) des Geräts zu Beginn des Kochens die Luft zu abzuführen, die ursprünglich in dem Kochraum enthalten ist, wobei das Entlüftungsventil einerseits einen Ventilkörper (5), der einen Sitz (6) bildet, und andererseits ein bewegliches Verschlusselement (7) umfasst, das dazu vorgesehen ist, sich unter der Wirkung des in dem Kochraum (4) herrschenden Drucks (P) von einer Öffnungsausführung, in der es von dem Sitz entfernt ist und den Austritt eines Gasstroms (F) von dem Raum (4) gestattet, in eine Verschlussausführung zu verschieben, in der es mit dem Sitz (6) in engen Kontakt kommt und die Dichtigkeit des Raums (4) gewährleistet, wobei das Ventil **dadurch gekennzeichnet ist, dass** es ein elastisches Rückstellelement (8) umfasst, das von dem Ventilkörper (5) und/oder dem Verschlusselement (7) getrennt ist und dazu vorgesehen ist, das Verschlusselement (7) in seine Öffnungsposition gegen den in dem Kochraum (4) herrschenden Druck zu schieben.

2. Entlüftungsventil nach Anspruch 1, **dadurch gekennzeichnet, dass** es einen vorderen Anschlag (9) aufweist, der für die Vorspannung des Verschlusselements (7) gegen das elastische Rückstellelement (8) geeignet ist.

3. Entlüftungsventil nach Anspruch 1 oder 2, **dadurch gekennzeichnet, dass** es derart angeordnet ist, dass es den Durchgangsquerschnitt, der die Zirkulation des Gasstroms ermöglicht, insbesondere wenn es sich in der maximalen Öffnungsausführung befindet, auf einen Wert kleiner oder gleich 12 mm³, vorzugsweise im Wesentlichen zwischen 4 und 12 mm³ und bevorzugt nahe 7,5 mm³ begrenzt.

4. Entlüftungsventil nach einem der vorhergehenden Ansprüche, **dadurch gekennzeichnet, dass** das Verschlusselement (7) von einem Kolben (10) gebildet ist, der gegen den Sitz (6) in Translation beweglich montiert ist.

5. Entlüftungsventil nach einem der vorhergehenden Ansprüche, **dadurch gekennzeichnet, dass** das elastische Rückstellelement (8) von einer Spiralfeder (13) gebildet ist, deren Steifigkeit an den Querschnitt des Kolbens (10) angepasst ist.

6. Entlüftungsventil nach den Ansprüchen 4 und 5, **dadurch gekennzeichnet, dass** der Kolben (10) und/oder der Sitz (6) mit einem ersten abgesetzten Schaft (10A) und einem zweiten abgesetzten Schaft (6A) versehen sind, auf die die Spiralfeder (13), die zwischen dem Kolben (10) und dem Sitz (6) angeordnet ist, jeweils mit jedem ihrer Enden aufgeschoben wird.

7. Entlüftungsventil nach einem der vorhergehenden Ansprüche, **dadurch gekennzeichnet, dass** es ein vormontiertes Modul bildet, umfassend einerseits eine erste Halbschale (20A), die den Sitz (6) bildet und die eine oder mehrere entsprechende Leckageöffnungen (23) aufweist, und andererseits eine zweite Halbschale (20B), umfassend eine oder mehrere Einlassöffnungen (24), wobei die zweite Halbschale auf die erste Halbschale aufgesetzt ist, um eine Schale (20) zu bilden, die den Körper (5) des Ventils darstellt und eine Kammer (21) begrenzt, die das Verschlusselement (7) und das elastische Rückstellelement (8) einschließt.

8. Entlüftungsventil nach einem der vorhergehenden Ansprüche, **dadurch gekennzeichnet, dass** der Auslösegrenzdruck (P_{S}) des Ventils, ab dem der in dem Raum (4) herrschende Druck die Rückstellkraft des elastischen Elements (8) überschreitet und das Verschlusselement (7) in seiner Verschlussausführung gegen den Sitz (6) anordnet, einem Überdruck im Wesentlichen zwischen 5 und 15 kPa und vorzugsweise nahe 10 kPa entspricht.

9. Entlüftungsventil nach einem der vorhergehenden Ansprüche, **dadurch gekennzeichnet, dass** das Verschlusselement (7) eine Verlängerung (25) aufweist, die eine Verriegelungsstange bildet, die dazu bestimmt ist, die Betätigung des Öffnungsmechanismus des Kochgeräts zu verhindern, wenn sich das Verschlusselement in Verschlussausführung befindet.

10. Druckkochtopf (2) vom Typ Dampfdruckkochtopf für Lebensmittel oder Autoklav, umfassend mindestens ein Entlüftungsventil (1) nach einem der vorhergehenden Ansprüche.

11. Gerät (2) nach Anspruch 10, **dadurch gekennzeichnet, dass** es einen Dampfdruckkochtopf darstellt, der für das Kochen von Lebensmitteln unter Druck bestimmt ist, umfassend einen Deckel (3), der auf einen Behälter aufgesetzt ist, um einen dichten Kochraum (4) zu begrenzen, wobei der Deckel (3) einerseits das Entlüftungsventil (1), das es ermöglicht, den Raum mit dem Außenbereich zu Beginn des Kochens in Verbindung zu bringen, und andererseits mindestens ein Druckregelelement umfasst, das von dem Entlüftungsventil getrennt ist und es ermöglicht, den Betriebsdruck des Geräts während des Kochens zu regeln.

## Claims

1. A bleed valve (1) for a pressure cooking utensil (2), said valve being designed to act, at the start of cooking, to remove from the cooking enclosure (4) of said utensil the air that is initially contained inside said cooking enclosure, said bleed valve comprising firstly a valve body (5) forming a seat (6), and secondly a moving closure member (7) designed to move, under the effect of the pressure (P) prevailing inside the cooking enclosure (4), from an open configuration, in which it is spaced apart from said seat and allows a gas flow (F) to leak from said enclosure (4), to a closed configuration, in which it comes into sealed contact with said seat (6) and seals said enclosure (4), said bleed valve being **characterized in that** it includes a resilient return member (8) that is distinct from the valve member (5) and / or from the closure member (7), and that is arranged to urge the closure member (7) towards its open configuration, against the pressure prevailing in the cooking enclosure (4).

2. A bleed valve according to claim 1, **characterized in that** it has a frontal abutment (9) suitable for pre-stressing the closure member (7) against the resilient return member (8).

3. A bleed valve according to claim 1 or claim 2, said bleed valve being **characterized in that** it is arranged to limit the flow section enabling the gas flow to pass through, in particular when said valve is in the maximum open configuration, to a value less than or equal to 12 mm2, and preferably substantially lying in the range 4 mm2 to 12 mm2, and preferably in the vicinity of 7.5 mm2.

4. A bleed valve according to any preceding claim, **characterized in that** the closure member (7) is formed by a piston (10) mounted to move in translation against the seat (6).

5. A bleed valve according to any preceding claim, **characterized in that** the resilient return member (8) is formed by a helical spring (13) having its stiffness appropriate to the section of the piston (10).

6. A bleed valve according to claim 4 and claim 5, **characterized in that** the piston (10) and/or the seat (6) are provided respectively with a first shouldered drum (10A) and with a second shouldered drum (6A), over which the helical spring (13) interposed between the piston (10) and the seat (6) is engaged via respective ones of its ends.

7. A bleed valve according to any preceding claim, **characterized in that** it forms a pre-assembled module comprising firstly a first half-shell (20A) that forms the seat (6) and that is provided with one or more corresponding leakage orifices (23), and secondly a second half-shell (20B) provided with one or more admission orifices (24), said second half-shell being mounted on said first half-shell to form a shell (20) constituting the body (5) of the valve and defining a chamber (21) that encloses the closure member (7) and the resilient return member (8).

8. A bleed valve according to any preceding claim, **characterized in that** the valve trigger threshold (PS), from which the pressure prevailing inside the enclosure (4) overcomes the return force of the resilient member (8) and places the closure member (7) in its closed configuration against the seat (6), corresponds to overpressure substantially lying in the range 5 kPa to 15 kPa, and preferably in the vicinity of 10 kPa.

9. A bleed valve according to any preceding claim, **characterized in that** the closure member (7) has an extension (25) forming a locking rod that is designed to prevent the mechanism for opening the cooking utensil from being operated when said closure member is in its closed configuration.

10. A pressure cooking utensil (2) of the food pressure cooker type or of the autoclave type, including at least one bleed valve (1) according to any preceding claim.

11. A utensil (2) according to claim 10, **characterized in that** it constitutes a pressure cooker, designed for cooking food under pressure, and including a lid (3) mounted on a vessel for defining a sealed cooking enclosure (4), said lid (3) firstly being provided with the bleed valve (1), making it possible to put the enclosure into communication with the outside at the start of cooking, and secondly being provided with at least one pressure regulation member, distinct from said bleed valve and making it possible to regulate the operating pressure of the utensil during cooking.
